# EUROPEAN PATENT SPECIFICATION

(11) **EP 1 379 038 B1**
(45) Date of publication and mention of the grant of the patent: **31.05.2006**
(21) Application number: 03253741.7
(22) Date of filing: 12.06.2003
(51) Int. Cl.: H04L 12/56

(54) **Method for implementing router interface backup with virtual router redundancy protocol**
Verfahren zur Ausführung eines Routerschnittstellen-Backups mit VRRP (Virtual Router Redundancy Protocol)
Procédé pour la mise en oeuvre de sauvegarde de l'interface d'un routeur par le protocole VRRP (Virtual Router Redundancy Protocol)

(30) Priority: 23.06.2002 CN 02124762
(43) Date of publication of application: 07.01.2004
(73) Proprietor: Huawei Technologies Co., Ltd., Guangdong, Shenzhen 518057 (CN)
(72) Inventor: Guo, Ning, Huawei Service Center Building, Kefa Rd, Shenzhen 518057, Guangdong (CN)
(74) Representative: Mounteney, Simon James

(56) References cited:
- US-A- 5 959 972
- HINDEN R., ET AL: "Virtual Router Redundancy Protocol (VRRP) - IETF Internet Draft Spec v 2-06" IETF INTERNET DRAFT, [Online] 28 February 2002 (2002-02-28), XP002253292 Retrieved from the Internet: <URL:http://www.ietf.org/proceedings/02mar /I-D/draft-ietf-vrrp-spec-v2-06.txt> [retrieved on 2003-09-03]
- NORTEL NETWORKS: "Virtual Router Redundancy Protocol (VRRP) White Paper" NORTEL NETWORKS WHITE PAPER, [Online] 2000, XP002253293 Retrieved from the Internet: <URL:http://www.nortelnetworks.com/solutio ns/lan/collateral/ppvrrp.pdf> [retrieved on 2003-09-03]
- LI T ET AL: "RCF 2281 - Cisco Hot Standby Router Protocolo (HSRP)" IETF RFC, March 1998 (1998-03), XP002196799 Retrieved from the Internet: <URL:http://kaizi.viagenie.qc.ca/ietf/rfc/ rfc2281.txt> [retrieved on 2002-04-19]

## Description

### Field of the Technology

The invention relates to data communication, and more particularly to a method for implementing router interface backup with Virtual Router Redundancy Protocol (VRRP).

### Background of the Invention

As the reliability requirement of data communication is increasing, backup function of data communication device becomes a serious concern. Usually, a router implements multiple backup functions, such as router backup, interface backup and board backup etc. On the one hand, these backup functions raise the reliability of equipment; but on the other hand, development costs and maintenance costs of the system are increased.

VRRP is a tolerance protocol, which is designed for a Local Area Network (LAN) with multicast and broadcast configuration, such as Ethernet. If there are two or more routers in a LAN, hosts in the LAN can communicate with other networks through any of the routers. According to "Virtual Router Redundancy Protocol (VRRP)- IETF Internet Draft Spec v 2-06", HIDDEN ET AL, 28 February 2002, when the next-hop router of a host in the LAN is failed, another router can take the place of it in time. The continuity and reliability of communication is thus kept. The network administrator configures different routers in the same network segment with the same group number and the same virtual IP address of virtual router, thus make them form a virtual router. A virtual router is consisted of one main router and several backup routers. The main router implements actual packet re-transmission function. When the main router is failed, a backup router becomes a new main router to replace the original one.

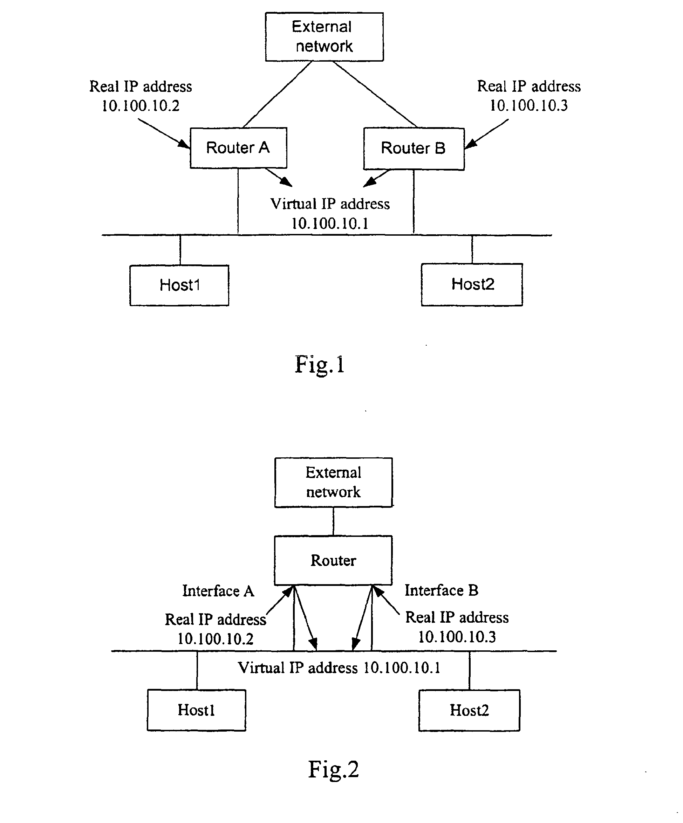

As shown in Figure 1 that illustrates the above-mentioned network configuration, router A, router B, host 1 and host 2 are in the same LAN. A group of routers (router A and router B) constitute a virtual router which has a virtual IP address 10.100.10.1. A host in the LAN only knows the virtual IP address, and does not know the IP addresses of router A and router B. The host in the LAN sets its default route with the IP address 10.100.10.1 of the virtual router. Therefore, the host in the LAN communicates with other networks through this virtual router.

For the virtual router, firstly, it is necessary to select a main router according to the priority of each router. A router with the maximum priority will become the main router that provides packet re-transmission service. At the same time, all the other routers will become backup routers that monitor the state of the main router at all times. When the main router is working normally, it sends a multicast VRRP packet at intervals to inform all backup routers in the same group that the main router is working at normal state. If backup routers in the group have not received the packet from the main router within a long period, the backup routers then act as main routers. If there are more than one backup router in a group, there will be multiple main routers in the beginning. In this instance, each main router compares its own priority with the priority involved in the received VRRP packet; if its own priority is less than that involved in the received VRRP packet, the router acts as a backup router, otherwise keeps its state unchanged. Through this procedure, a router with the maximum priority will be selected as the new main router, and the router backup function will be completed.

It can be seen from above, with VRRP, when a router in a LAN is failed, it will be replaced with another router automatically. Nevertheless, when there is only one router in a LAN, it is not able to implement router backup. So, it is necessary to implement interface backup in order to ensure the reliability of communication. With interface backup, when an interface of a router is failed, it can be replaced with another interface of the same router. Unfortunately, the application of present VRRP is limited to router backup only, and cannot implement backup between interfaces.

### Summary of the Invention

It is an object of the present invention to provide a method for implementing interface backup with VRRP in order to overcome the shortcoming that the VRRP is only used in routers but not in interfaces. The method implements backup not only between routers, but also between interfaces with multicast and broadcast functions. The method expands VRRP functions to make a protocol satisfy two requirements for backup.

According to the present invention, there is provided a method as set out in Claim 1. Preferred features of the invention are set out in Claims 2 to 4.

Methods of the present invention group multiple interfaces of a VRRP router into a multicast group and configure the multiple interfaces with the same virtual router number and virtual IP address to make them constitute a virtual router. In this way, backup between interfaces has been implemented without affecting the original backup function between routers. Consequentially, no mater there is one router or multiple routers in a network, default gateway backup can be implemented. The method of the invention is simple and feasible; meanwhile it expands the application of VRRP with one protocol satisfying two requirements of backup; so it is benefit for raising the reliability of networks.

### Brief Description of the Drawings

Embodiments of the invention will now be described, by way of example, and with reference to the accompanying drawings in which:
Figure 1 shows the network configuration with VRRP according to the prior art; and
Figure 2 shows the network configuration according to the invention.

### Detailed Description of the Invention

The invention is further described hereinafter, with reference to the drawings and embodiments.

Figure 2 shows the network configuration according to the invention. Firstly, multiple interfaces of a router are connected to the same LAN and added to the same multicast group. A multicast packet sent by one interface can be received by any other interface in the same multicast group. Figure 2 shows the condition that there are two interfaces in a router. Secondly, the same virtual router number and virtual IP address are respectively configured to the above-mentioned interfaces connected to the LAN, so the interfaces are added to the same virtual router. The interfaces in the same virtual router select the main interface and the backup interfaces according to their respective priorities.

The selection procedure of main interface and backup interfaces are as follow. When an interface is initiated, it is a backup interface at first; if it has not received any VRRP multicast packet after waiting for a period, it will become the main interface. If the interface is the owner of the IP address, i.e., the actual IP address of the interface is identical with its virtual IP address, the interface becomes the main interface directly after initiated and is configured with the maximum priority automatically. Then the main interface sends a VRRP multicast packet. Since all interfaces of a virtual router are in the same multicast group, the VRRP multicast packet sent by the main interface can be received by other interfaces in this group. If several interfaces become main interfaces simultaneously, each interface compares its own priority with the priority involved in received VRRP packet. When the priority involved in the packet is higher than the priority of the interface, the interface becomes a backup interface. After this selection procedure, the interface with the maximum priority in the virtual router becomes the main interface, and the others become backup interfaces.

The main interface periodically sends VRRP multicast packets to respond to an address resolution request for virtual IP address. It is the virtual link layer address instead of the real link layer address that the main interface responds to. At the same time, the main interface receives and re-transmits an IP packet taking the destination link address as a virtual link address. The backup interfaces do not respond to the resolution request for virtual IP addresses, and discard the IP packet taking destination link address as a virtual link address. When the main interface is failed, a VRRP packet with zero priority or no VRRP packet will be sent. In this instance, each backup interface detects whether the priority involved in the received VRRP packet is higher than its own priority; if so, the backup interface keeps its state unchanged, otherwise it becomes the main interface. In this way, it is avoided that several backup interfaces become main interfaces simultaneously. Therefore, only one backup interface becomes the main interface and replaces the original one.

If there are multiple routers in a LAN, multiple interfaces of different routers can be configured with the same virtual router number and added to the same virtual router at the same time.

## Claims

1. A method for implementing router interface backup with Virtual Router Redundancy Protocol (VRRP), **characterised by** comprising:
(1) connecting multiple interfaces of a router to a single LAN and adding the interfaces to a single multicast group;
(2) configuring a single virtual router number and a single virtual IP address to said interfaces to make said interfaces join a single virtual router;
(3) selecting a main interface and backup interfaces according to their respective priorities among said interfaces; and
(4) sending VRRP multicast packets from the main interface to all backup interfaces periodically; if the priority involved in the just received VRRP multicast packet is zero or the backup interfaces have not received any VRRP multicast packet within a predetermined period, one backup interface becoming the main interface and replacing the original main interface.

2. The method according to Claim 1, wherein said step of selecting the main interface and backup interfaces comprises the steps of:
(1) an interface directly becoming a backup interface when initiated; and becoming the main interface if it has not received any VRRP multicast packet within a period;
(2) if the virtual IP address of the interface is identical with its real IP address, the interface directly becoming the main interface after initiated, and being configured with the maximum priority automatically; and
(3) if multiple interfaces become main interfaces simultaneously, each interface comparing the priority involved in the received VRRP packet with its own priority; if the priority involved in the received VRRP packet is higher than its own priority, the interface becoming a backup interface.

3. The method according to Claim 1, further comprising: judging whether the priority involved in the VRRP packet received by a backup interface is higher than the priority configured to the backup interface, if so, keeping the state of the backup interface unchanged; otherwise making the backup interface become the main interface.

4. The method according to Claim 1, further comprising connecting multiple interfaces of at least one further router to the single LAN and adding the interfaces of the or each further router to the single multicast group.

## Patentansprüche

1. Verfahren zum Implementieren eines Routerschnittstellen-Backups mit einem Virtual Router Redundancy Protocol (VRRP), **gekennzeichnet durch** die folgenden Schritte:
(1) Verbinden von mehreren Schnittstellen eines Routers mit einem einzelnen LAN und Hinzufügen der Schnittstellen zu einer einzelnen Multicast-Gruppe;
(2) Konfigurieren einer einzelnen Nummer eines virtuellen Routers und einer einzelnen virtuellen IP Adresse an den Schnittstellen, um die Schnittstellen zu veranlassen sich einem einzelnen virtuellen Router anzuschließen;
(3) Wählen einer Hauptschnittstelle und von Backup-Schnittstellen in Übereinstimmung mit ihren jeweiligen Prioritäten unter den Schnittstellen; und
(4) periodisches Senden von VRRP Multicast-Paketen von der Hauptschnittstelle an alle Backup-Schnittstellen; wenn die Priorität, die zu dem eben empfangenen VRRP Multicast-Paket gehört, Null ist oder die Backup-Schnittstellen irgendein VRRP Multicast-Paket innerhalb einer vorgegebenen Periode nicht empfangen haben, wobei eine Backup-Schnittstelle die Haupt-Schnittstelle wird und die ursprüngliche Hauptschnittstelle ersetzt.

2. Verfahren nach Anspruch 1, wobei der Schritt zum Wählen der Hauptschnittstelle und von Backup-Schnittstellen die folgenden Schritte umfasst:
(1) eine Schnittstelle wird direkt eine Backup-Schnittstelle, wenn sie initiiert wird; und wird die Hauptschnittstelle, wenn sie irgendein VRRP Multicast-Paket innerhalb einer Periode nicht empfangen hat;
(2) wenn die virtuelle IP Adresse der Schnittstelle identisch mit ihrer realen IP Adresse ist, wird die Schnittstelle direkt die Hauptschnittsstelle, nachdem sie aktiviert ist, und wird mit der Maximum-Priorität automatisch konfiguriert; und
(3) wenn mehrere Schnittstellen gleichzeitig Hauptschnittstellen werden, vergleicht jede Schnittstelle die Priorität, die zu dem empfangenen Paket gehört, mit ihrer eigenen Priorität; wenn die Priorität, die zu dem empfangenen VRRP Paket gehört, höher als ihre eigene Priorität ist, wird die Schnittstelle eine Backup-Schnittstelle.

3. Verfahren nach Anspruch 1, ferner umfassend die folgenden Schritte: Beurteilen, ob die Priorität, die zu dem VRRR Paket gehört, das durch die Backup-Schnittstelle empfangen wird, höher ist als die Priorität, die an der Backup-Schnittstelle konfiguriert ist, wenn dem so ist, Beibehalten des Zustands der Backup-Schnittstelle unverändert; ansonsten bewirken, dass die Backup-Schnittstelle die Hauptschnittstelle wird.

4. Verfahren nach Anspruch 1, ferner umfassend ein Verbinden von mehreren Schnittstellen von wenigstens einem weiteren Router mit dem einzelnen LAN und Hinzufügen der Schnittstellen von dem oder jedem weiterem Router zu der einzelnen Multicast-Gruppe.

## Revendications

1. Procédé pour mettre en oeuvre un secours d'interface de routeur avec un Protocole de Redondance de Routeur Virtuel (VRRP), **caractérisé en ce qu'**il comprend :
(1) la connexion de multiples interfaces d'un routeur sur un unique LAN et l'addition des interfaces à un unique groupe de multidiffusion ;
(2) la configuration d'un unique numéro de routeur virtuel et d'une unique adresse IP virtuelle sur lesdites interfaces afin de faire en sorte que lesdites interfaces rejoignent un unique routeur virtuel;
(3) la sélection d'une interface principale et d'interfaces de secours conformément à leurs priorités respectives parmi lesdites interfaces ; et
(4) l'envoi de paquets de multidiffusion VRRP depuis l'interface principale sur toutes les interfaces de secours de façon périodique ; si la priorité mise en jeu dans le paquet de multidiffusion VRRP juste reçu vaut zéro (0) ou si les interfaces de secours n'ont pas reçu un quelconque paquet de multidiffusion VRRP à l'intérieur d'une période prédéterminée, une interface de secours devient l'interface principale et remplace l'interface principale originale.

2. Procédé selon la revendication 1, dans lequel ladite étape de sélection de l'interface principale et des interfaces de secours comprend les étapes de :
(1) une interface devient directement une interface de secours lorsqu'elle est initiée ; et elle devient l'interface principale si elle n'a pas reçu un quelconque paquet de multidiffusion VRRP à l'intérieur d'une période ;
(2) si l'adresse IP virtuelle de l'interface est identique à son adresse IP réelle, l'interface devient directement l'interface principale après initiation et est configurée de manière automatique moyennant la priorité maximum ; et
(3) si de multiples interfaces deviennent des interfaces principales simultanément, chaque interface compare la priorité mise en jeu dans le paquet VRRP reçu avec sa propre priorité ; si la priorité mise en jeu dans le paquet VRRP reçu est supérieure à sa propre priorité, l'interface devient une interface de secours.

3. Procédé selon la revendication 1, comprenant en outre : l'appréciation de si la priorité mise en jeu dans le paquet VRRP qui est reçu par une interface de secours est supérieure à la priorité qui est configurée pour l'interface de secours et s'il en est ainsi, le maintien de l'état de l'interface de secours inchangé ; sinon, le fait de faire en sorte que l'interface de secours devienne l'interface principale.

4. Procédé selon la revendication 1, comprenant en outre la connexion de multiples interfaces d'au moins un routeur supplémentaire sur l'unique LAN et l'addition des interfaces du routeur ou de chaque routeur supplémentaire sur l'unique groupe de multidiffusion.
